# EUROPÄISCHE PATENTSCHRIFT

(11) **EP 3 854 662 B1**
(45) Veröffentlichungstag und Bekanntmachung des Hinweises auf die Patenterteilung: **22.11.2023**
(21) Anmeldenummer: 20153661.2
(22) Anmeldetag: 24.01.2020
(51) Int. Cl.: F16C 29/04, B62D 1/185, F16C 3/035, F16D 3/06

(54) **LENKWELLENBAUGRUPPE FÜR EIN KRAFTFAHRZEUG**
STEERING SHAFT ASSEMBLY FOR A MOTOR VEHICLE
MODULE D'ARBRE DE DIRECTION POUR UN VÉHICULE AUTOMOBILE

(43) Veröffentlichungstag der Anmeldung: 28.07.2021
(73) Patentinhaber: THK Rhythm Automotive GmbH, 40233 Düsseldorf (DE)
(72) Erfinder: Irrer, Ryan, 40233 Düsseldorf (DE)
(74) Vertreter: Prinz & Partner mbB

(56) Entgegenhaltungen:
- WO-A1-2018/104209
- CN-U- 203 835 970
- DE-A1-102015 102 183
- DE-A1-102016 216 011
- DE-A1-102016 222 795

## Beschreibung

Die Erfindung betrifft eine Lenkwellenbaugruppe für ein Kraftfahrzeug gemäß dem Oberbegriff des Anspruchs 1.

Solche Lenkwellenbaugruppen sind aus dem Stand der Technik bekannt. Sie werden insbesondere für Lenkwellenbaugruppen genutzt, deren axiale Länge einstellbar ist, um eine Position eines mit der Lenkwellenbaugruppe verbundenen Lenkrads an einen Fahrer des Kraftfahrzeugs anpassen zu können.

Dabei wird allgemein eine einfache Einstellbarkeit der Lenkwellenbaugruppe gefordert, d. h. eine Verschiebung der ersten Welle gegenüber der zweiten Welle soll ohne hohen Kraftaufwand möglich sein. Gleichzeitig muss sichergestellt sein, dass die Lenkwellenbaugruppe auch im Falle eines Defekts im Bereich der Kopplung der ersten Welle mit der zweiten Welle noch ein gewisses Drehmoment übertragen kann, sodass das mit der Lenkwellenbaugruppe ausgestattete Kraftfahrzeug lenkbar bleibt.

Die DE 10 2015 102 183 A1 zeigt eine Lenkwellenbaugruppe gemäß dem Oberbegriff des Anspruchs 1.

Die DE 10 2016 222 795 A1 und die DE 10 2016 216 011 A1 zeigen Lenkwellenbaugruppen, bei denen ein erster und ein zweiter Drehkopplungsmechanismus vorgesehen sind, die beide formschlüssig montiert sind.

Vor diesem Hintergrund ist es die Aufgabe der Erfindung, eine verbesserte Lenkwellenbaugruppe anzugeben. Diese soll insbesondere im Falle eines Defekts eine gute Lenkbarkeit des damit ausgestatteten Kraftfahrzeugs gewährleisten. Zudem soll die Lenkwellenbaugruppe einfach und kostengünstig aufgebaut sein.

Die Aufgabe wird bei einer Lenkwellenbaugruppe der eingangs genannten Art mit dem Merkmalen des kennzeichnenden Teils des Anspruchs 1 gelöst. Die erste Welle und die zweite Welle sind also hinsichtlich der Drehmomentübertragung redundant gekoppelt. Für den Fall, dass einer der Drehkopplungsmechanismen defekt ist, bleibt das Kraftfahrzeug somit über den anderen Drehkopplungsmechanismus lenkbar. Die Lenkwellenbaugruppe ist somit besonders robust gegenüber Defekten. Der zweite Drehkopplungsmechanismen wirkt nur dann, wenn am ersten Drehkopplungsmechanismus ein Defekt auftritt. Für den Fall, dass der erste Drehkopplungsmechanismus Wälzkörper aufweist, kann ein solcher Defekt im Verlust eines oder mehrerer Wälzkörper bestehen. Die erste Welle und die zweite Welle sind dann über den zweiten Drehkopplungsmechanismus weiterhin zuverlässig drehmomentleitend gekoppelt. Das Drehkoppelteil ist aufgrund der kraftschlüssigen Verbindung zuverlässig mit der ersten Welle verbunden. Ferner ist so das Drehkoppelteil einfach auf der ersten Welle montierbar.

Die beiden Drehkopplungsmechanismen können in Drehkoppelrichtung jeweils ein unterschiedliches Spiel aufweisen, sodass in einem Normalbetrieb die Drehkopplung im Wesentlichen über den Drehkopplungsmechanismus mit dem geringeren Spiel erfolgt. Der Drehkopplungsmechanismus mit dem größeren Spiel kommt also erst dann zum Einsatz, wenn der Drehkopplungsmechanismus mit dem geringeren Spiel einen Defekt aufweist. Das größere Spiel bewirkt dabei, dass der zugehörige Drehkopplungsmechanismus bei der axialen Verstellung der Lenkwellenbaugruppe, d. h. beim axialen Verschieben der ersten Welle gegenüber der zweiten Welle, keinen oder nur einen kleinen Widerstand darstellt. Dadurch kann die Lenkwellenbaugruppe einfach eingestellt werden.

Gemäß einer Ausführungsform weist ein erster der beiden Drehkopplungsmechanismen zumindest einen Wälzkörper auf, der in Drehkoppelrichtung sowohl formschlüssig an der ersten Welle als auch an der zweiten Welle gelagert ist, insbesondere wobei der Wälzkörper als Axialführungselement wirkt. Die erste Welle und die zweite Welle sind also über den zumindest einen Wälzkörper formschlüssig drehgekoppelt. Es ergibt sich eine zuverlässige Drehmomentübertragung. Ferner erfolgt eine axiale Verstellung, d. h. ein axiales Verschieben der ersten Welle gegenüber der zweiten Welle über den zumindest einen Wälzkörper. Damit kann die erste Welle mit vergleichsweise geringem Kraftaufwand gegenüber der zweiten Welle verschoben werden. Vorzugsweise hat dabei der erste der beiden Drehkopplungsmechanismen in Drehkoppelrichtung ein geringeres Spiel als ein zweiter der beiden Drehkopplungsmechanismen. Der Wälzkörper ist insbesondere eine Kugel. Es ist somit die erste Welle gegenüber der zweiten Welle in Axialrichtung kugelgelagert.

Der Wälzkörper kann in einer Axialnut an einem Außenumfang der ersten Welle und/oder in einer Axialnut an einem Innenumfang der zweiten Welle aufgenommen sein. Axialnuten sind vergleichsweise einfach herstellbar. Daher ist auch die Lenkwellenbaugruppe insgesamt einfach herstellbar. Auch wird so eine zuverlässige Kopplung der ersten Welle mit der zweiten Welle erreicht.

Bevorzugt sind am Außenumfang der ersten Welle mehrere Axialnuten vorgesehen. Jeder Axialnut der ersten Welle liegt dabei am Innenumfang der zweiten Welle eine Axialnut gegenüber. In jedem Paar einander gegenüberliegender Axialnuten ist zumindest ein Wälzkörper aufgenommen. Somit lässt sich eine zuverlässige Drehmomentübertragung zwischen der ersten Welle und der zweiten Welle sicherstellen. Ferner ist lässt sich durch eine derartige Wälzlagerung die erste Welle leicht gegenüber der zweiten Welle verschieben.

In einer Variante ist der zumindest eine Wälzkörper in einem Wälzkörperkäfig geführt. Der Wälzkörper ist somit stets an der für ihn vorgesehenen Position gehalten. Dadurch arbeitet die Lenkwellenbaugruppe zuverlässig und präzise.

Vorzugsweise weist dabei der zweite der beiden Drehkopplungsmechanismen in Drehkoppelrichtung ein größeres Spiel auf als der erste der beiden Drehkopplungsmechanismen.

Bevorzugt weist das Drehkoppelteil an seinem Außenumfang zumindest einen Koppelvorsprung auf, der in eine Axialnut an einem Innenumfang der zweiten Welle eingreift. Eine solche Kopplung ist einfach herstellbar und zuverlässig im Betrieb. Dabei ist die Axialnut am Innenumfang der zweiten Welle vorzugsweise dieselbe, die auch für die Aufnahme der Wälzkörper des ersten Drehkopplungsmechanismus verwendet wird. Es ergibt sich insgesamt ein einfacher Aufbau der Lenkwellenbaugruppe.

Das Drehkoppelteil kann auch mehrere, an seinem Außenumfang verteilt angeordnete Koppelvorsprünge aufweisen, wobei jeder Koppelvorsprung in eine zugeordnete Axialnut am Innenumfang der zweiten Welle eingreift. Es ergibt sich so eine besonders zuverlässige Kopplung der ersten Welle mit der zweiten Welle. Es können zwei bis sechs Koppelvorsprünge vorgesehen sein. Insbesondere weist das Drehkoppelteil drei Koppelvorsprünge auf.

Das Drehkoppelteil kann über eine Pressverbindung mit einem verzahnten Endabschnitt der ersten Welle verbunden sein. Insbesondere wird beim Aufpressen des Drehkoppelteils die Verzahnung am Endabschnitt der ersten Welle verformt. Alternativ oder zusätzlich kann sich dabei auch das Drehkoppelteil verformen, insbesondere dessen Innenumfang. Es ergibt sich eine zuverlässige Verbindung des Drehkoppelteils mit der ersten Welle. Ferner ist eine solche Verbindung einfach und kostengünstig herstellbar.

Die Erfindung wird nachstehend anhand eines Ausführungsbeispiels erläutert, das in den beigefügten Zeichnungen gezeigt ist. Es zeigen:
- Figur 1 eine erfindungsgemäße Lenkwellenbaugruppe in einer schematischen Darstellung,
- Figur 2 einen Ausschnitt II aus Figur 1 in einer perspektivischen Detailansicht,

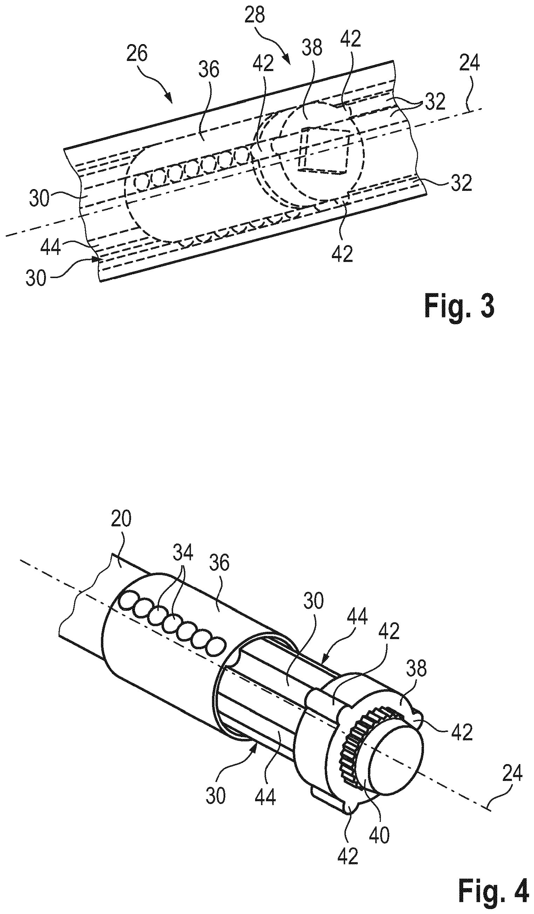

- Figur 3 den Ausschnitt II aus Figur 1 aus einer gegenüber der Figur 2 veränderten Perspektive, und
- Figur 4 die erfindungsgemäße Lenkwellenbaugruppe in einer perspektivischen Ansicht, wobei die zweite Welle fortgelassen ist.

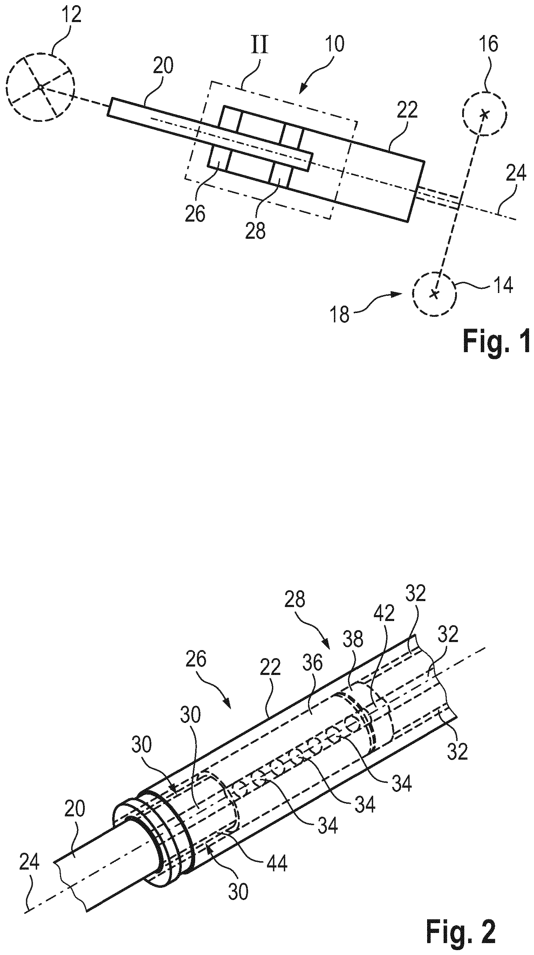

Figur 1 zeigt eine Lenkwellenbaugruppe 10.

Zum besseren Verständnis ist dabei eine Kopplung der Lenkwellenbaugruppe 10 mit einem Lenkrad 12 und Rädern 14, 16 einer lenkbaren Kraftfahrzeugachse 18 durch gestrichelte Linien angedeutet.

Die Lenkwellenbaugruppe 10 umfasst eine erste Welle 20, die im dargestellten Ausführungsbeispiel mit dem Lenkrad 12 gekoppelt ist, und eine zweite Welle 22, die im dargestellten Ausführungsbeispiel mit der lenkbaren Kraftfahrzeugachse 18 verbunden ist.

Beide Wellen 20, 22 sind um eine Mittelachse 24 drehbar.

Dabei ist die zweite Welle 22 als Hohlwelle ausgeführt. Ein Abschnitt der ersten Welle 20 ist axial verschiebbar im Inneren der zweiten Welle 22 aufgenommen.

Die erste Welle 20 und die zweite Welle 22 sind über einen ersten Drehkopplungsmechanismus 26 und einen zweiten Drehkopplungsmechanismus 28 drehmomentleitend gekoppelt. Dabei sind die beiden Drehkopplungsmechanismen 26, 28 voneinander separat.

Am Außenumfang der ersten Welle 20 sind mehrere Axialnuten 30 vorgesehen.

Jeder dieser Axialnuten 30 liegt am Innenumfang der zweiten Welle 22 eine Axialnut 32 gegenüber.

Dabei sind in jedem Paar an Axialnuten 30, 32 Wälzkörper 34 aufgenommen, die somit sowohl an der ersten Welle 20 als auch an der zweiten Welle 22 in Drehkoppelrichtung formschlüssig gelagert sind.

Folglich sind die erste Welle 20 und die zweite Welle 22 in Drehkoppelrichtung über die Wälzkörper 34 formschlüssig gekoppelt.

Im dargestellten Ausführungsbeispiel sind in jedem Paar an Axialnuten 30, 32 acht Wälzkörper 34 vorgesehen, von denen aus Gründen der besseren Übersichtlichkeit nur einige mit einem Bezugszeichen versehen sind.

Im dargestellten Ausführungsbeispiel sind die Wälzkörper 34 Kugeln.

Um die Wälzkörper 34 gegen Verlust zu sichern und sie gruppiert an den Wellen 20, 22 zu positionieren, sind diese in einem Wälzkörperkäfig 36 geführt.

Die Kopplung der ersten Welle 20 und der zweiten Welle 22 über die Axialnuten 30, 32 und die darin angeordneten Wälzkörper 34 stellt den ersten Drehkopplungsmechanismus 26 dar.

Der zweite Drehkopplungsmechanismus 28 weist ein Drehkoppelteil 38 auf, das mit einem verzahnten Endabschnitt 40 der ersten Welle 20 mittels einer Pressverbindung verbunden ist.

Das Drehkoppelteil 38 ist somit kraftschlüssig mit der ersten Welle 20 gekoppelt.

In der dargestellten Ausführungsform weist das Drehkoppelteil 38 insgesamt drei Koppelvorsprünge 42 auf, die an seinem Außenumfang gleichmäßig verteilt angeordnet sind.

Jeder der Koppelvorsprünge 42 greift in eine der Axialnuten 32 am Innenumfang der zweiten Welle 22 ein.

Der zweite Drehkopplungsmechanismus 28 ist somit durch das Drehkoppelteil 38 mit den Koppelvorsprüngen 42, dessen Pressverbindung auf der ersten Welle 20 und die zugeordneten Axialnuten 32 gebildet.

Die Koppelvorsprünge 42 sind dabei entlang der Mittelachse 24 gegenüber der zweiten Welle 22 verschiebbar, jedoch in Drehkoppelrichtung formschlüssig mit dieser gekoppelt.

Dabei sind die Koppelvorsprünge 42 so gestaltet, dass sie in der Drehkoppelrichtung gegenüber den jeweils zugehörigen Axialnuten 32 ein Spiel aufweisen, das größer ist als das in Drehkoppelrichtung orientierte Spiel des ersten Drehkopplungsmechanismus 26.

Dadurch stellen die Wälzkörper 34 bei einer Verschiebung der ersten Welle 20 gegenüber der zweiten Welle 22 entlang der Mittelachse 24 Axialführungselemente dar.

Aufgrund des größeren Spiels kontaktieren die Koppelvorsprünge 42 die Wände und den Grund der Axialnuten 32 im Zuge einer Axialverschiebung nicht oder nur in geringem Umfang.

Auch bei der Drehkopplung wirkt der zweite Drehkopplungsmechanismus 28 aufgrund des größeren Spiels nicht mit. Diese Situation wird als Normalbetrieb bezeichnet.

Erst wenn am ersten Drehkopplungsmechanismus 26 ein Defekt auftritt, die Lenkwellenbaugruppe 10 also in einem Fehlerbetrieb arbeitet, kontaktieren die Koppelvorsprünge 42 die Wände und/oder den Grund der Axialnuten 32 und stellen so sicher, dass weiterhin ein Drehmoment vom Lenkrad 12 auf die Kraftfahrzeugachse 18 übertragen werden kann.

Ein Defekt bringt beispielsweise einen Verlust der Wälzkörper 34 mit sich.

Es sei abschließend darauf hingewiesen, dass die erste Welle 20 noch weitere Axialnuten 44 aufweist. Diese dienen jedoch lediglich der Gewichtsreduktion und nicht der Drehkopplung der Wellen 20, 22.

## Patentansprüche

1. Lenkwellenbaugruppe (10) für ein Kraftfahrzeug, mit einer ersten Welle (20) und einer zweiten Welle (22), die beide um eine Mittelachse (24) drehbar sind, wobei die zweite Welle (22) eine Hohlwelle ist und ein Abschnitt der ersten Welle (20) axial verschiebbar im Inneren der zweiten Welle (22) aufgenommen ist, wobei die erste Welle (20) und die zweite Welle (22) über zwei voneinander separate Drehkopplungsmechanismen (26, 28) drehmomentleitend gekoppelt sind, **dadurch gekennzeichnet, dass** ein zweiter der beiden Drehkopplungsmechanismen (26, 28) ein Drehkoppelteil (38) aufweist, das an der ersten Welle (20) befestigt ist und in Drehkoppelrichtung formschlüssig an der zweiten Welle (22) gelagert ist, insbesondere wobei das Drehkoppelteil (38) axial verschiebbar an der zweiten Welle (22) gelagert ist, und dass das Drehkoppelteil (38) kraftschlüssig mit der ersten Welle verbunden ist, insbesondere mit einem Endabschnitt (40) der ersten Welle (20) verbunden ist, wobei jeder Drehkopplungsmechanismus dafür geeignet ist, ein zum Lenken des Kraftfahrzeugs nötiges Drehmoment zu übertragen.

2. Lenkwellenbaugruppe (10) nach Anspruch 1, **dadurch gekennzeichnet, dass** die beiden Drehkopplungsmechanismen (26, 28) in einer Drehkoppelrichtung jeweils ein unterschiedliches Spiel aufweisen, sodass in einem Normalbetrieb die Drehkopplung im Wesentlichen über den Drehkopplungsmechanismus (26) mit dem geringeren Spiel erfolgt.

3. Lenkwellenbaugruppe (10) nach Anspruch 1 oder 2, **dadurch gekennzeichnet, dass** ein erster der beiden Drehkopplungsmechanismen (26, 28) zumindest einen Wälzkörper (34) aufweist, der in Drehkoppelrichtung sowohl formschlüssig an der ersten Welle (20) als auch an der zweiten Welle (22) gelagert ist, insbesondere wobei der Wälzkörper (34) als Axialführungselement wirkt.

4. Lenkwellenbaugruppe (10) nach Anspruch 3, **dadurch gekennzeichnet, dass** der Wälzkörper (34) in einer Axialnut (30) an einem Außenumfang der ersten Welle (20) und/oder in einer Axialnut (32) an einem Innenumfang der zweiten Welle (22) aufgenommen ist.

5. Lenkwellenbaugruppe (10) nach Anspruch 4, **dadurch gekennzeichnet, dass** am Außenumfang der ersten Welle (20) mehrere Axialnuten (30) vorgesehen sind und jeder Axialnut (30) der ersten Welle (20) am Innenumfang der zweiten Welle (22) eine Axialnut (32) gegenüberliegt, wobei in jedem Paar einander gegenüberliegender Axialnuten (30, 32) zumindest ein Wälzkörper (34) aufgenommen ist.

6. Lenkwellenbaugruppe (10) nach einem der Ansprüche 3 bis 5, **dadurch gekennzeichnet, dass** der zumindest eine Wälzkörper (34) in einem Wälzkörperkäfig (36) geführt ist.

7. . Lenkwellenbaugruppe (10) nach einem der vorhergehenden Ansprüche, **dadurch gekennzeichnet, dass** das Drehkoppelteil (38) an seinem Außenumfang zumindest einen Koppelvorsprung (42) aufweist, der in eine Axialnut (32) an einem Innenumfang der zweiten Welle (22) eingreift.

8. Lenkwellenbaugruppe (10) nach Anspruch 7, **dadurch gekennzeichnet, dass** das Drehkoppelteil (38) mehrere, an seinem Außenumfang verteilt angeordnete Koppelvorsprünge (42) aufweist, wobei jeder Koppelvorsprung (42) in eine zugeordnete Axialnut (32) am Innenumfang der zweiten Welle (22) eingreift.

9. Lenkwellenbaugruppe (10) nach einem der vorhergehenden Ansprüche, **dadurch gekennzeichnet, dass** das Drehkoppelteil (38) über eine Pressverbindung mit einem verzahnten Endabschnitt (40) der ersten Welle (20) verbunden ist.

## Claims

1. A steering shaft assembly (10) for a motor vehicle, comprising a first shaft (20) and a second shaft (22), both of which are rotatable about a central axis (24), wherein the second shaft (22) is a hollow shaft and a portion of the first shaft (20) is received so as to be axially displaceable inside the second shaft (22), the first shaft (20) and the second shaft (22) being coupled in a torque-transmitting manner via two rotary coupling mechanisms (26, 28) separate from each other, **characterized in that** a second of the two rotary coupling mechanisms (26, 28) has a rotary coupling part (38) which is fastened to the first shaft (20) and is mounted in a form-fitting manner at the second shaft (22) in the rotary coupling direction, in particular wherein the rotary coupling part (38) is mounted so as to be axially displaceable on the second shaft (22), and **in that** the rotary coupling part (38) is connected to the first shaft in a force-fitting manner, in particular is connected to an end portion (40) of the first shaft (20), each rotary coupling mechanism being suitable to transmit a torque required for steering the motor vehicle.

2. The steering shaft assembly (10) according to claim 1, **characterized in that** the two rotary coupling mechanisms (26, 28) each have a different play in a rotary coupling direction so that in normal operation, the rotary coupling takes place substantially via the rotary coupling mechanism (26) having the smaller play.

3. The steering shaft assembly (10) according to claim 1 or 2, **characterized in that** a first of the two rotary coupling mechanisms (26, 28) has at least one rolling body (34) which is mounted in a form-fitting manner both on the first shaft (20) and on the second shaft (22) in the rotary coupling direction, in particular wherein the rolling body (34) acts as an axial guide element.

4. The steering shaft assembly (10) according to claim 3, **characterized in that** the rolling body (34) is received in an axial groove (30) on an outer circumference of the first shaft (20) and/or in an axial groove (32) on an inner circumference of the second shaft (22).

5. The steering shaft assembly (10) according to claim 4, **characterized in that** a plurality of axial grooves (30) is provided on the outer circumference of the first shaft (20), and **in that** each axial groove (30) of the first shaft (20) has an axial groove (32) on the inner circumference of the second shaft (22) arranged opposite thereto, wherein at least one rolling body (34) is received in each pair of axial grooves (30, 32) which are opposite each other.

6. The steering shaft assembly (10) according to any of claims 3 to 5, **characterized in that** the at least one rolling body (34) is guided in a rolling body cage (36).

7. The steering shaft assembly (10) according to any of the preceding claims, **characterized in that** the rotary coupling part (38) has at least one coupling projection (42) on its outer circumference, which engages in an axial groove (32) on an inner circumference of the second shaft (22).

8. The steering shaft assembly (10) according to claim 7, **characterized in that** the rotary coupling part (38) has a plurality of coupling projections (42) arranged so as to be distributed on its outer circumference, wherein each coupling projection (42) engages in an associated axial groove (32) on the inner circumference of the second shaft (22).

9. The steering shaft assembly (10) according to any of the preceding claims, **characterized in that** the rotary coupling part (38) is connected to a toothed end portion (40) of the first shaft (20) via a press-fit connection.

## Revendications

1. Ensemble (10) d'arbre de direction pour véhicule automobile, comprenant un premier arbre (20) et un deuxième arbre (22) qui sont tous les deux mobiles en rotation autour d'un axe médian (24), le deuxième arbre (22) étant un arbre creux, et un tronçon du premier arbre (20) étant reçu de manière axialement déplaçable à l'intérieur du deuxième arbre (22), le premier arbre (20) et le deuxième arbre (22) étant couplés par deux mécanismes de couplage en rotation (26, 28) séparés l'un de l'autre de manière à transmettre un couple, **caractérisé en ce qu'**un deuxième des deux mécanismes de couplage en rotation (26, 28) présente une pièce de couplage en rotation (38) qui est fixée au premier arbre (20) et est montée sur le deuxième arbre (22) par coopération de formes dans le sens du couplage en rotation, la pièce de couplage en rotation (38) étant notamment montée axialement déplaçable sur le deuxième arbre (22), et **en ce que** la pièce de couplage en rotation (38) est reliée au premier arbre par coopération de forces et est en particulier reliée à un tronçon d'extrémité (40) du premier arbre (20), chaque mécanisme de couplage en rotation étant apte à transmettre un couple nécessaire pour la conduite du véhicule automobile.

2. Ensemble (10) d'arbre de direction selon la revendication 1, **caractérisé en ce que** les deux mécanismes de couplage en rotation (26, 28) présentent chacun un jeu différent dans le sens du couplage en rotation, de sorte que lors d'un fonctionnement normal, le couplage en rotation est réalisé sensiblement par l'intermédiaire du mécanisme de couplage en rotation (26) présentant le jeu plus faible.

3. Ensemble (10) d'arbre de direction selon la revendication 1 ou 2, **caractérisé en ce qu'**un premier des deux mécanismes de couplage en rotation (26, 28) présente au moins un corps de roulement (34) qui, dans le sens du couplage en rotation, est monté par coopération de formes tant sur le premier arbre (20) que sur le deuxième arbre (22), le corps de roulement (34) agissant en particulier en tant qu'élément de guidage axial.

4. Ensemble (10) d'arbre de direction selon la revendication 3, **caractérisé en ce que** le corps de roulement (34) est reçu dans une rainure axiale (30) sur une périphérie extérieure du premier arbre (20) et/ou dans une rainure axiale (32) sur une périphérique intérieure du deuxième arbre (22).

5. Ensemble (10) d'arbre de direction selon la revendication 4, **caractérisé en ce qu'**il est prévu une pluralité de rainures axiales (30) sur la périphérie extérieure du premier arbre (20) et **en ce qu'**une rainure axiale (32) sur la périphérie intérieure du deuxième arbre (22) est opposée à chaque rainure axiale (30) du premier arbre (20), au moins un corps de roulement (34) étant reçu dans chaque paire de rainures axiales (30, 32) opposées l'une à l'autre.

6. Ensemble (10) d'arbre de direction selon l'une des revendications 3 à 5, **caractérisé en ce que** ledit au moins un corps de roulement (34) est guidé dans une cage de corps de roulement (36).

7. Ensemble (10) d'arbre de direction selon l'une des revendications précédentes, **caractérisé en ce que** la pièce de couplage en rotation (38) présente sur sa périphérie extérieure au moins une saillie de couplage (42) qui s'engage dans une rainure axiale (32) sur une périphérie intérieure du deuxième arbre (22).

8. Ensemble (10) d'arbre de direction selon la revendication 7, **caractérisé en ce que** la pièce de couplage en rotation (38) présente une pluralité de saillies de couplage (42) agencées de manière distribuée sur sa périphérie extérieure, chaque saillie de couplage (42) s'engageant dans une rainure axiale (32) associée sur la périphérie intérieure du deuxième arbre (22).

9. Ensemble (10) d'arbre de direction selon l'une des revendications précédentes, **caractérisé en ce que** la pièce de couplage en rotation (38) est reliée à un tronçon d'extrémité denté (40) du premier arbre (20) par une liaison par emboîtement forcé.
